# EUROPEAN PATENT APPLICATION

(11) **EP 1 125 723 A2**
(43) Date of publication of application: **22.08.2001**
(21) Application number: 01103484.0
(22) Date of filing: 15.02.2001
(51) Int. Cl.: B29C 67/24

(54) **Composite material for producing objects, in particular finishing elements for building, and method of production**

(30) Priority: 15.02.2000 IT MO000020
(71) Applicant: BANDINI MASSIMINO S.R.L., 43100 Parma (IT)
(72) Inventor: Gambuzza, Alessandro, 16100 Genova (IT)
(74) Representative: Luppi, Luigi

(57) **Abstract**

A product comprises binding means (2) and an inert material (3) agglomerated by said binding means, selected so as to obtain a non-opaque finished product (1), namely a transparent or translucent product; the inert material (3) affects at least one face of said product (1) and irregularly coats said face; the binding means (3) comprises a hardening resin; a method for forming a product comprises preparing a flowable semi-finished product (3) and further preparing a binding material (2) separately pouring said flowable semi-finished product (3) and said a binding material (2) into a cavity (11; 11a; 11b; 11c; 24) of a mould (7, 8, 9, 10; 7a, 8a, 9a, 10; 7b, 8b, 9b, 9c; 7c, 8c, 9c1, 10; 20).

## Description

The invention relates to a production method and a new composite material suitable for obtaining products for any use, for example for indoor and outdoor decoration, building industry, giftware and other uses.

Prior art comprises products as slab containing a hardening resin amalgamated with granulated materials and/or sands of stony material. Such slabs are produced by casting into a mould the amalgamated compound and by subjecting said compound to vibrations and to vacuum compaction. The compound is hardened and then extracted from the mould in order to be used in the final applications.

A material for architectonic structures is furthermore known, named glass cement, which allows to obtain constructions, such as walls, or floors, or ceiling, of translucent material, so that the light coming from the outside is partially allowed to filter inside the environments of such constructions.

On the other hand, the structure of the glass cement, which normally is available as blocks, of brick-like type, is not very versatile and furthermore does not allow achieving levels of finishing, aesthetically satisfactory for the more sophisticated applications.

Therefore, there is the problem of finding a new type of material which allows higher versatility of use.

Furthermore it is desirable to produce a material with which it is possible to obtain new and more sophisticated aesthetical effects.

In a first aspect of the invention, a product is provided comprising binding means and an inert material agglomerated by said binding means, characterized in that, said inert material and said binding means are selected so as to obtain a non-opaque finished product, namely a transparent or translucent product.

In a second aspect of the invention, a product is provided comprising hardening resin based binding means and an inert material agglomerated by said binding means, characterized in that said inert material affects at least a face of said product and irregularly coats said face.

The inert material may be vitreous based material, and comprise in particular fragments of glass, preferably tempered glass, or portion thereof, sheets, flakes, metallic or plastic granules.

Furthermore, the inert material may be a natural material, for example mineral or vegetable.

Fragments of tempered glass may be advantageously used since such fragments may be obtained from vitreous portions of motor vehicles, such as side windows, windshields, or rear windows, normally of difficult disposal.

In a third aspect of the invention, a method is provided for forming a product, comprising preparing a flowable semi-finished product and further preparing a binding material, characterized in that, it comprises separately pouring in a mould cavity said binding material and said flowable semi-finished product.

In an advantageous variation, the method comprises first pouring a binding material into said cavity in order to form a base layer with said binding material and subsequently pouring, above said base layer, said flowable semi-finished product so as to incorporate said flowable semi-finished product in said base layer.

The flowable semi-finished product may be completely incorporated into the base layer, so that particles of said semi-finished -product are completely included into said base layer, otherwise the flowable semi-finished product may emerge from said base layer so obtaining a rough external surface thereof.

The mould may have any dimensions and shape and therefore the finished product may correspondingly take the shape of the desired mould cavity.

After being poured into the mould, the semi-finished product is incorporated into the base layer so that the base layer is reinforced and the finished product is provided with the required properties of mechanical strength against wear.

Furthermore, if the hardening resin is transparent, or translucent, possibly coloured, the granular material and the resin are associated so as to obtain effects of optical refraction of the incident light so imparting valuable and original properties to the finished product.

The invention can be better understood and carried out with reference to the enclosed drawings, which show exemplifying and not restrictive embodiments thereof, wherein:
Figure 1 is a perspective view of a tile according to the invention;
Figure 2 is a perspective broken and enlarged view of a corner region of the tile of Figure 1;
Figure 3 is an elevation view of a casting mould for a fluid product in order to obtain a wall produced with the method according to the invention;
Figure 4 is a top view of Figure 3;
Figure 5 is a perspective view of a variation of the mould of Figures 3 and 4;
Figures 6, 7 and 8 are top 'views of possible further variations of mould.
Figures 9, 10, 11 and 12 show sequentially the forming steps of a product, in particular a first step during which a multiple mould is arranged, a second step during which the binding material and the flowable semi-finished product are prepared, a third step during which the binding material is cast into the forming cavities and a fourth step during which the flowable semi-finished product is cast onto the binding material.

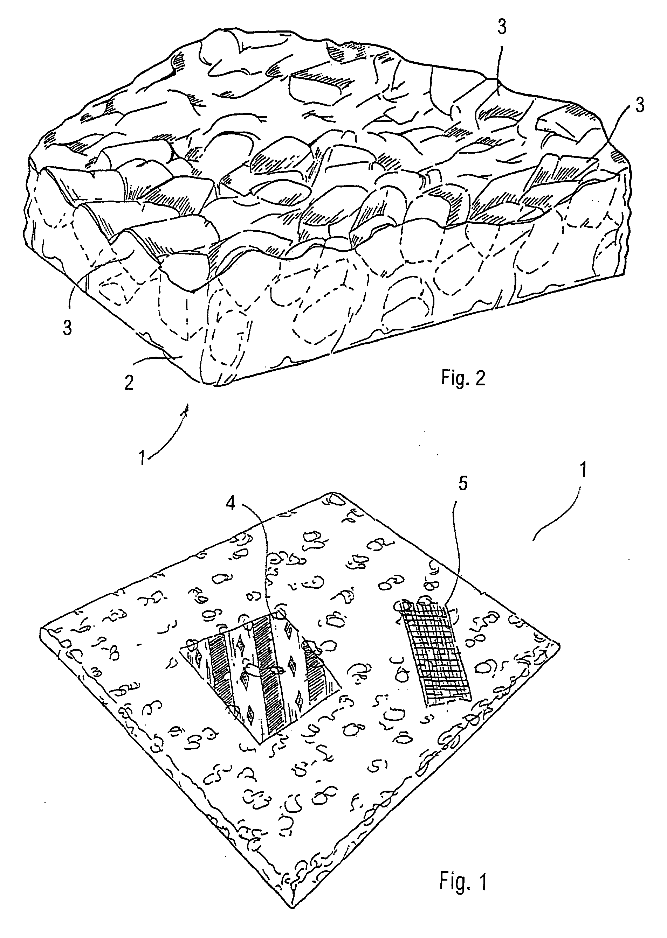

As shown in Figures 1 and 2, a flat tile-shaped product 1 comprises a layer of binding material 2 of hardening transparent resin, in which granules 3 of an incoherent material are included, said granules initially forming a flowable mass, for instance comprising fragments of tempered glass. The binding material 2 may also comprise, in addition to the granules 3, inclusions of cloth 4, or net 5, for instance, suitable for giving particular mechanical functional properties, such as, for example, higher strength against stresses, or for improving the esthetical pleasantness of the final product.

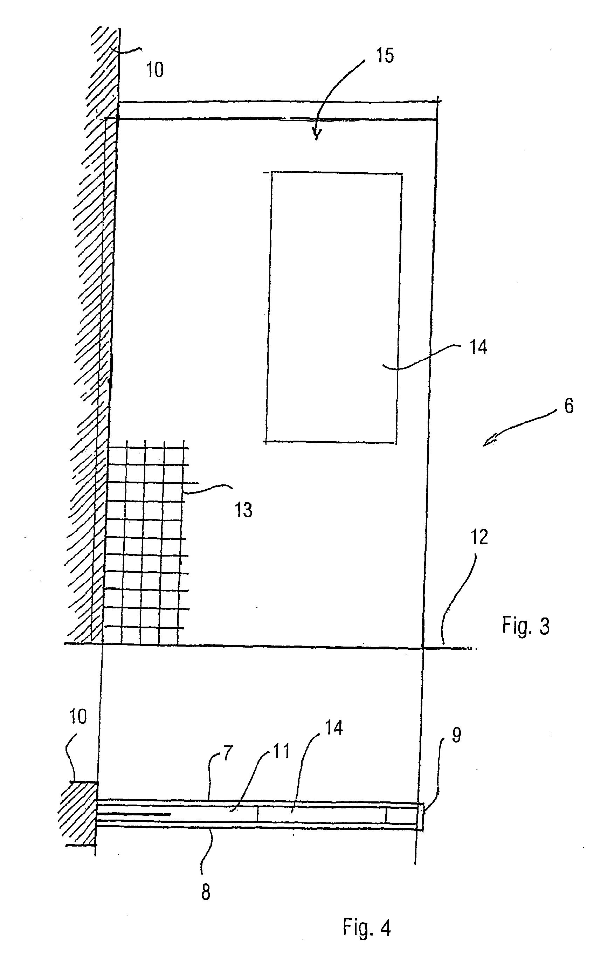

As shown in Figures 3, 4 and 5, a casting mould 6 for a fluid product comprises opposite and parallel walls 7, 8, defining a space 11 and closed at one end by a further wall 9 and, at the other end, by a conventional wall 10.

The mould 6 extends vertically from the floor 12 and is internally provided with a reinforcing element 13, such as a net-like structure, which, in the final product, may be visible or hidden, depending on whether the resin cast in the space 11 is transparent, or translucent or respectively opaque.

The mould structure 6 so obtained is comparable to a formwork for concrete casting.

A separating wall 14, for example of transparent material, may fill a portion of the space 11 in order to obtain a window in the finished product. The separating wall 14 is initially kept stationary by fixing elements connecting the separating wall 14 with the walls 7, 8.

The mould 6 has an upper opening 15 through which firstly the fluid resin 2 and subsequently the granular material 3 are cast until the mould is progressively and completely filled.

Once the resin has hardened, the walls 7, 8 and 9 are removed and the final product becomes visible.

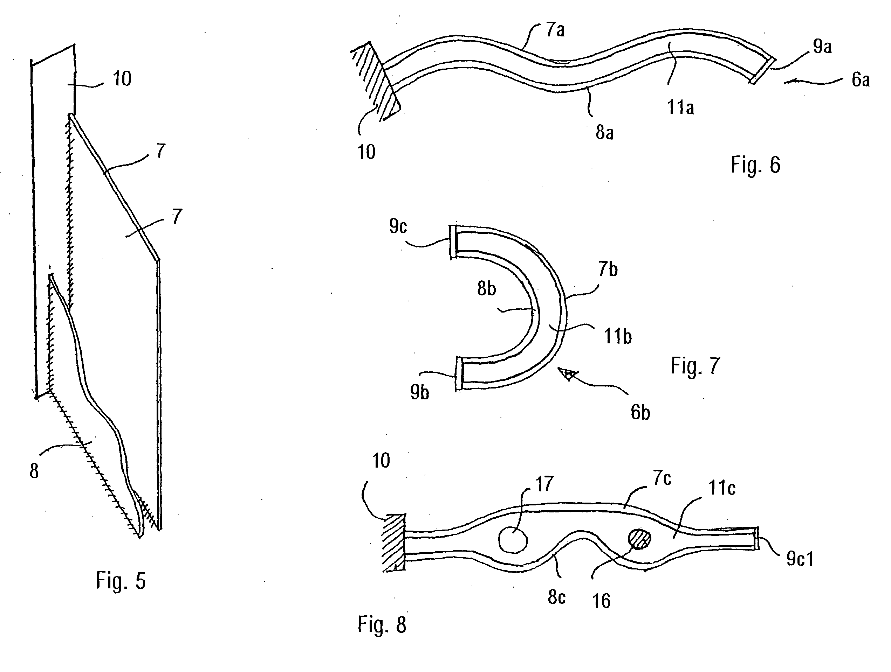

In Figure 6 a mould 6a is shown which may comprise walls 7a, 8a, 9a having a sinuous plan layout and defining another space 11a.

As shown in Figure 7, a mould 6b may comprise a couple of semi-cylindrical vertical walls 7b, 8b closed at their ends by further walls 9b, 9c to form a further semi-cylindrical space 11b; therefore, a self-supporting structure, i.e. separate from supporting walls, for the finished product is obtained.

In the version of Figure 8, a mould 6c may comprise a first wall 7c having a convex outer profile portion and a second wall 8c having a convex inner profile portion, closed at one end by the wall 10 and at the other end by a still further wall 9c1 so as to give place to an space 11c having a variable thickness.

Inclusions may be present also in the space 11c, for example a column 16 supporting the structure of the building, or a decorative column 17.

A further decorative effect may be obtained by eliminating one of the inclusions, for example the inclusion 17, after the resin has been hardened, which is possible by pouring suitable solvents in the region of the inclusion and then removing the dissolved material.

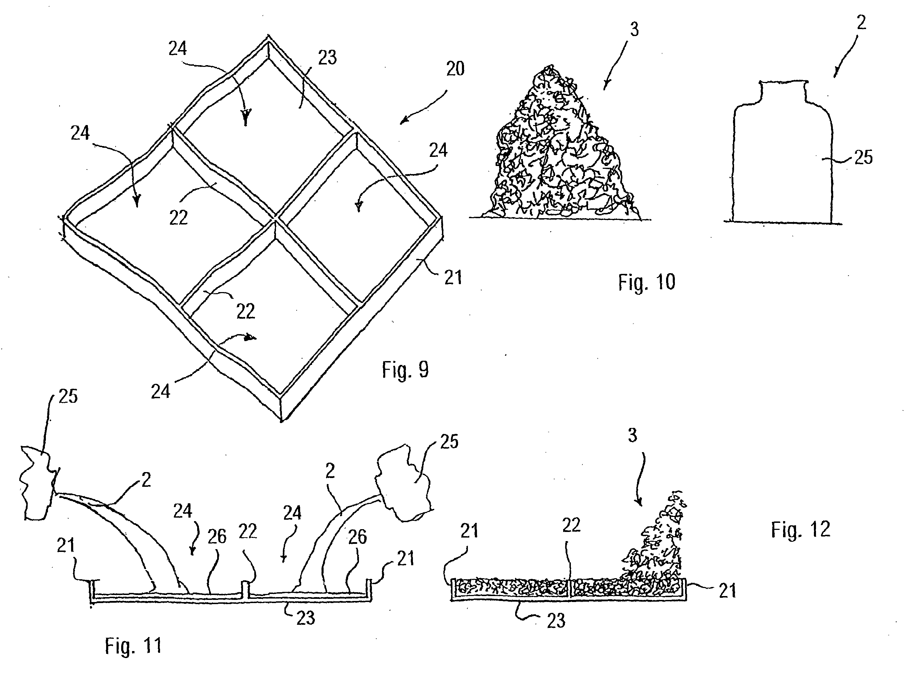

As shown in Figures 9 to 12, a multiple mould 20 comprise an external frame 21 having opposite sides interconnected by crossed separating walls 22 and an end wall 23; therefore the mould 20 has four cavities 24 suitable for forming tile-type products.

The granular material 3 and the resin 2 collected into a suitable container 25 are kept separate, so that the resin 2 may be first poured into the cavity 24 in order to form a base layer 26 and the granular material 3 may be then poured on the base layer 26 until the cavity 24 is totally filled.

After the resin 2 has hardened, the product contained into the cavity 24 may be extracted from the mould 20 by deforming the walls 21, 22, 23 thereof which - for this purpose - are advantageously obtained in deformable material, such as synthetic rubber, which has no affinity with the resin 2.

## Claims

1. Product comprising binding means (2) and an inert material (3) agglomerated by said binding means, characterized in that, said inert material (3) and said binding material (2) are selected so as to obtain a non-opaque finished product (1), namely a transparent or translucent product.

2. Product according to claim 1, wherein said inert material (3) affects at least one face of said product (1) and irregularly coats said face.

3. Product according to claim 1, or 2, wherein said binding means (2) comprises a hardening resin.

4. Product comprising hardening resin based binding means (2) and an inert material (3) agglomerated by said binding means, characterized in that, said inert material (3) affects at least one face of said product (1) and irregularly coats said face.

5. Product according to claim 4, wherein said hardening resin is non-opaque, namely a transparent or translucent resin.

6. Product according to any one of the preceding claims, and further comprising inserts (13, 5, 4) arranged within said inert material (3) and bound to said inert material (3) by means of said binding material (2).

7. Product according to any one of the preceding claims, wherein said inert material (3) comprises a vitreous base, preferably containing tempered glass.

8. Product according to any one of the preceding claims, wherein said inert material (3) comprises metallic parts.

9. Product according to any one of the preceding claims, wherein said inert material (3) comprises plastic parts.

10. Product according to any one of the preceding claims, wherein said inert material (3) is a natural material.

11. Method for forming a product, comprising preparing a flowable semi-finished product (3) and further preparing a binding material (2), characterized in that it comprises separately pouring into a cavity (11; 11a; 11b; 11c; 24) of mould (7, 8, 9, 10; 7a, 8a, 9a, 10; 7b, 8b, 9b, 9c; 7c, 8c, 9c1, 10; 20) said binding material (2) and said flowable semi-finished product (3).

12. Method according to claim 11, wherein said separately pouring comprises first pouring into said cavity (11; 11a; 11b; 11c; 24) binding material (2) for form a base layer (26) with said binding material (2).

13. Method according to claim 12, wherein said separately pouring comprises pouring said flowable semi-finished product (3) on said base layer (26) so that said flowable semi-finished product (3) is incorporated, at least partially, into said base layer (26).

14. Method according to any one of claims 11 to 13, wherein before said pouring inclusions (4; 5; 13; 14; 16; 17) are positioned into said cavity (11; 11a; 11b; 11c; 24).

15. Method according to any one of claims 11 to 14, wherein removing portions of said mould (7, 8, 9, 10; 7a, 8a, 9a, 10; 7b, 8b, 9b, 9c; 7c, 8c, 9c1, 10; 20) from the hardened product (1) is provided.

16. Method according to claim 15, wherein said mould (20) is obtained in flexible material.
